# EUROPEAN PATENT SPECIFICATION

(11) **EP 3 315 548 B1**
(45) Date of publication and mention of the grant of the patent: **17.04.2019**
(21) Application number: 17197936.2
(22) Date of filing: 24.10.2017
(51) Int. Cl.: C08L 7/00, C08L 9/00, B29C 73/16, B29D 30/06, B60C 19/12, C08L 23/22

(54) **RUBBER COMPOSITION FOR SEALANTS**
KAUTSCHUKZUSAMMENSETZUNG FÜR DICHTUNGSMITTEL
COMPOSITION DE CAOUTCHOUC POUR ENDUITS

(30) Priority: 31.10.2016 JP 2016213180
(43) Date of publication of application: 02.05.2018
(73) Proprietor: Sumitomo Rubber Industries, Ltd., Kobe-shi, Hyogo 651-0072 (JP)
(72) Inventor: SUGIMOTO, Mutsuki, Kobe-shi, Hyogo 651-0072 (JP)
(74) Representative: TBK

(56) References cited:
- EP-A1- 3 009 260
- EP-A1- 3 009 473
- WO-A1-2016/060243
- WO-A1-2016/060247

## Description

### TECHNICAL FIELD

The present invention relates to a rubber composition for sealants and a pneumatic tire including the rubber composition.

### BACKGROUND ART

Self-sealing tires with sealants applied to the inner surfaces thereof have been known as puncture-resistant pneumatic tires (hereinafter, pneumatic tires are also referred to simply as tires). The sealants automatically seal puncture holes formed in the self-sealing tires . Various studies on such sealants have been made.

### SUMMARY OF INVENTION

### TECHNICAL PROBLEM

The present inventor has found through experimentation that conventional sealants leave room for improvement in terms of retention of low-temperature sealing performance.

The present invention aims to solve the problem and provide a rubber composition for sealants having excellent retention of low-temperature sealing performance and a pneumatic tire (self-sealing tire) including the rubber composition.

### SOLUTION TO PROBLEM

In the prior art, the physical properties of rubber compositions for sealants are evaluated only immediately after production of the rubber compositions for sealants, and little attention has been paid to changes in the physical properties with time. The studies of the present inventor have revealed that their viscosity increases after the production, and furthermore that the increase in viscosity particularly deteriorates sealing performance at low temperatures, among the physical properties.

As a result of extensive experimentation, the present inventor has also found that a rubber composition which exhibits an increase (difference) in viscosity at -20°C of 4.0 kPa·s or less between measurements before and after storage at 25°C for any 10-day period within a period of 60 days after production of the rubber composition has a stable viscosity about 100 days after the production. On the other hand, it has been found that a rubber composition which exhibits an increase (difference) in viscosity of more than 4.0 kPa·s keeps increasing in viscosity even 120 days after the production. Thus, the present inventor has found that a rubber composition for sealants which exhibits an increase (difference) in viscosity at -20°C of 4.0 kPa·s or less between measurements before and after storage at 25°C for any 10-day period within a period of 60 days after production of the rubber composition has a stable viscosity about 100 days after the production and therefore has good retention of low-temperature sealing performance. The inventor thus completed the present invention.

Specifically, the present invention relates to a rubber composition for sealants, having a difference in viscosity at -20°C of 4.0 kPa·s or less between measurements before and after storage at 25°C for any 10-day period within a period of 60 days after production of the rubber composition.

The rubber composition for sealants preferably contains, per 100 parts by mass of a rubber component therein, 100 parts by mass or more of a liquid polymer.

The rubber composition for sealants preferably contains, per 100 parts by mass of the rubber component, 8 parts by mass or less of an organic peroxide and 8 parts by mass or less of a crosslinking activator.

The rubber composition for sealants contains, per 100 parts by mass of the rubber component, 20 parts by mass or more of a plasticizer.

The rubber composition for sealants preferably contains butyl rubber in a rubber component.

The present invention also relates to a pneumatic tire (self-sealing tire), including a sealant layer formed from the rubber composition.

### ADVANTAGEOUS EFFECTS OF INVENTION

The rubber composition for sealants of the present invention has a difference in viscosity at -20°C of 4.0 kPa·s or less between measurements before and after storage at 25°C for any 10-day period within a period of 60 days after production of the rubber composition. Thus, the present invention can provide a rubber composition for sealants having excellent retention of low-temperature sealing performance, and a pneumatic tire (self-sealing tire) including the rubber composition.

### BRIEF DESCRIPTION OF DRAWINGS

Fig. 1 is an explanatory view schematically showing an example of an applicator used in a method for producing a self-sealing tire.
Fig. 2 is an enlarged view showing the vicinity of the tip of the nozzle included in the applicator shown in Fig. 1.
Fig. 3 is an explanatory view schematically showing the positional relationship of the nozzle to the tire.
Fig. 4 is an explanatory view schematically showing an example of a generally string-shaped sealant continuously and spirally attached to the inner periphery of a tire.
Figs. 5 are enlarged views showing the vicinity of the tip of the nozzle included in the applicator shown in Fig. 1.
Fig. 6 is an explanatory view schematically showing an example of a sealant attached to a self-sealing tire.
Fig. 7 is an explanatory view schematically showing an example of a production facility used in a method for producing a self-sealing tire.
Fig. 8 is an explanatory view schematically showing an example of a cross-section of the sealant shown in Fig. 4 when the sealant is cut along the straight line A-A orthogonal to the direction along which the sealant is applied (longitudinal direction).
Fig. 9 is an explanatory view schematically showing an example of a cross-section of a pneumatic tire.
Fig. 10 is a view schematically showing exemplary changes in the viscosities of sealants.

### DESCRIPTION OF EMBODIMENTS

The rubber composition for sealants (sealant) of the present invention has a difference in viscosity (increase in viscosity) at -20°C of 4.0 kPa·s or less between measurements before and after storage at 25°C for any 10-day period within a period of 60 days after production of the rubber composition.

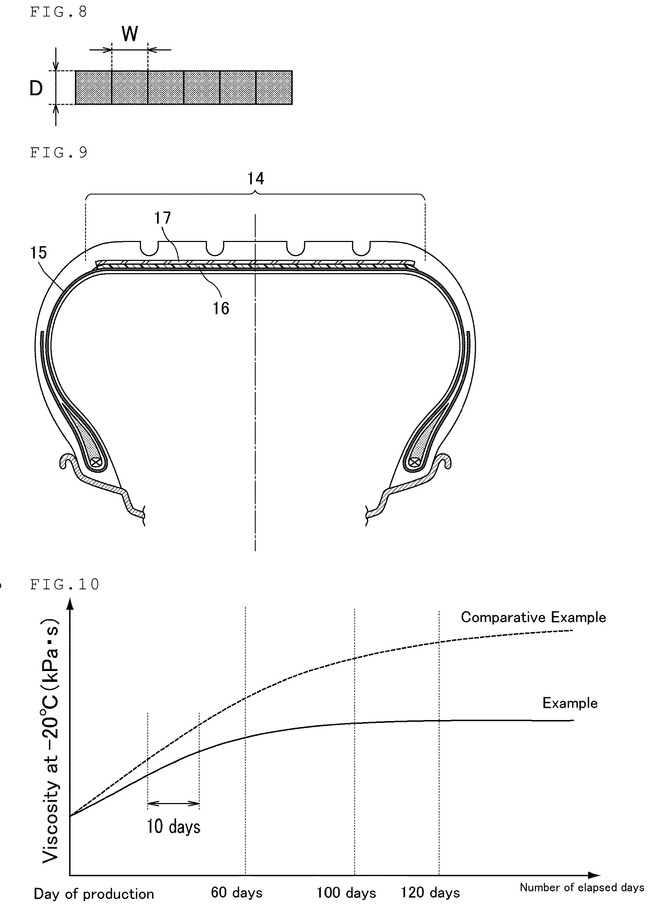

Fig. 10 is a view schematically showing exemplary changes in the viscosities of sealants. As shown in Fig. 10, the present inventor has found through experimentation that: when, although the sealant exhibits an increase in viscosity after the production, the increase (difference) in viscosity at -20°C between measurements before and after storage at 25°C for any 10-day period within a period of 60 days after the production is 4.0 kPa·s or less, or in other words, the rate of viscosity increase is equal to or less than a predetermined value in any 10-day period within a period of 60 days after the production, the sealant has a stable viscosity about 100 days after the production. On the other hand, it has been found that when the sealant exhibits an increase (difference) in viscosity of more than 4.0 kPa·s, or in other words, has a rate of viscosity increase that is more than a predetermined value in any 10-day period within a period of 60 days after the production, the sealant keeps increasing in viscosity even 120 days after the production.

As described above, by adjusting the difference in viscosity (increase in viscosity) at -20°C between measurements before and after storage at 25°C for any 10-day period within a period of 60 days after the production to be equal to or less than a predetermined value, the sealant has a stable viscosity about 100 days after the production. Thus, it is possible to produce a sealant having excellent retention of low-temperature sealing performance (sealing performance at -50°C). The sealant has excellent retention of low-temperature sealing performance probably because since the viscosity of the sealant becomes stable about 100 days after the production, the viscosity increase with time is suppressed, good fluidity is ensured even in a low temperature range (-50°C) where the viscosity has a large impact, and the deterioration in low-temperature sealing performance with time is reduced.

The rubber composition of the present invention has a difference in viscosity at -20°C of 4.0 kPa·s or less, preferably 3. 5 kPa·s or less, more preferably 3.0 kPa·s or less, still more preferably 2.5 kPa·s or less, between measurements before and after storage at 25°C for any 10-day period within a period of 60 days after production of the rubber composition. A smaller difference in viscosity is preferred, and the lower limit of the difference is not particularly limited, but is preferably 0.5 kPa·s or more, more preferably 1.0 kPa·s or more.

Herein, the viscosity at -20°C of the rubber composition for sealants (sealant) is measured at -20°C in accordance with JIS K 6833 using a rotational viscometer. Specifically, it is determined as described in EXAMPLES.

Also herein, the 10-day storage at 25°C of the rubber composition for sealants may be carried out by leaving the rubber composition for sealants at 25°C under a normal pressure for 10 days (240 hours).

The any 10-day period within a period of 60 days after the production may be any 10-day period included in a period of 60 days after the production. For example, the rubber composition for sealants is stored at 25°C for 10 days immediately after the production, for example, within six hours after the preparation of the rubber composition for sealants, and then a difference may be determined between the viscosity at -20°C measured immediately after the production and the viscosity at -20°C measured after the storage at 25°C for 10 days following the production. Thus, it is possible to quickly evaluate retention of low-temperature sealing performance of the produced sealant. The sealant may be applied to the inner surface of tires by any method. In cases where a sealant prepared with a continuous kneader is directly applied to the inner peripheral surface of a tire, the expression "immediately after production of the sealant" means "immediately after application of the sealant to the inner surface of a tire".

The predetermined difference in viscosity at -20°C between measurements before and after storage at 25°C for any 10-day period within a period of 60 days after production of the rubber composition can be achieved by allowing the rubber composition to have a predetermined formulation as described later.

The investigation by the present inventor revealed that the viscosity of a produced sealant increases mainly due to the progress of crosslinking. Hence, the most important technical point for suppressing the viscosity increase is to reduce reactions between rubber and crosslinking agents. The use of a large amount of crosslinking agents results in an increased amount of unreacted crosslinking agents. These unreacted crosslinking agents can allow crosslinking to gradually proceed even at room temperature, thereby increasing the viscosity. In this regard, by optimizing the amount of crosslinking agents, such unnecessary crosslinking reactions can be prevented, and therefore the viscosity increase due to the crosslinking reactions can be reduced. In cases where the rubber used is a butyl-based rubber, it is preferably a non-halogenated butyl rubber rather than a highly reactive halogenated butyl rubber.

Specific techniques for suppressing the viscosity increase include sealants described in detail later which contain butyl rubber as the rubber component, a predetermined amount or more of a liquid polymer, preferably a liquid polymer having a relatively high molecular weight (or a kinematic viscosity as described later), a predetermined amount or less of a crosslinking agent (organic peroxide, sulfur), a predetermined amount or less of a crosslinking activator, and/or a predetermined amount or more of a plasticizer (oil) to reduce the difference in the viscosity.

The rubber composition for sealants (sealant) of the present invention is applied to portions of the inner surface of self-sealing tires where a puncture hole may be formed, such as treads. The following will describe the sealant with reference to suitable examples of methods for producing a self-sealing tire.

A self-sealing tire can be produced, for example, by preparing a sealant by mixing the components of the sealant, and then attaching the sealant to the inner periphery of a tire by application or other means to form a sealant layer. The self-sealing tire includes the sealant layer located radially inside the innerliner.

The following will describe suitable examples of methods for producing the self-sealing tire of the present invention.

A self-sealing tire can be produced, for example, by preparing a sealant by mixing the components of the sealant, and then attaching the sealant to the inner periphery of a tire by application or other means to form a sealant layer. The self-sealing tire includes the sealant layer located radially inside the innerliner.

The hardness (viscosity) of the sealant needs to be adjusted to an appropriate viscosity according to the service temperature by controlling the rubber component and the degree of crosslinking. The rubber component is controlled by varying the type and amount of liquid polymers, plasticizers, or carbon black, while the degree of crosslinking is controlled by varying the type and amount of crosslinking agents or crosslinking activators.

Any sealant that shows adhesion may be used, and rubber compositions usually used to seal punctures of tires can be used. The rubber component constituting a main ingredient of such a rubber composition may include a butyl-based rubber. Examples of the butyl-based rubber include butyl rubber (IIR) and halogenated butyl rubbers (X-IIR) such as brominated butyl rubber (Br-IIR) and chlorinated butyl rubber (Cl-IIR). In particular, in view of fluidity and other properties, either butyl rubber or halogenated butyl rubber, or both of them, can be suitably used. The butyl-based rubber to be used is preferably in the form of pellets. Such a pelletized butyl-based rubber can be precisely and suitably supplied to a continuous kneader so that the sealant can be produced with high productivity.

The butyl-based rubber is preferably butyl rubber. The use of butyl rubber contributes to reducing the difference in the viscosity, so that a sealant having good retention of low-temperature sealing performance can be more suitably obtained.

Crosslinking is allowed to proceed at a moderate rate when the rubber composition of the present invention contains both butyl rubber and an organic peroxide, preferably together with a crosslinking activator. For this reason, the rubber composition can be suitably prepared using a continuous kneader such as a twin screw kneading extruder which requires a relatively short kneading time. This can reduce problems such as excessive crosslinking, thereby providing better retention of low-temperature sealing performance.

To ensure more suitable fluidity of the sealant, the butyl-based rubber preferably has a Mooney viscosity ML₁₊₈ at 125°C of 20 to 60, more preferably 40 to 60. If the ML₁₊₈ is less than 20, fluidity may decrease. If the ML₁₊₈ is more than 60, sealing performance may decrease. The use of a butyl-based rubber having a Mooney viscosity within the above range contributes to reducing the difference in the viscosity, so that a sealant having good retention of low-temperature sealing performance can be more suitably obtained.

The Mooney viscosity ML₁₊₈ at 125°C is determined in accordance with JIS K-6300-1:2001 at a test temperature of 125°C using an L-type rotor with a preheating time of one minute and a rotation time of eight minutes.

The amount of the butyl-based rubber based on 100% by mass of the rubber component is preferably 80% by mass or more, more preferably 90% by mass or more, and may be 100% by mass. This contributes to reducing the difference in the viscosity, so that a sealant having good retention of low-temperature sealing performance can be more suitably obtained.

In addition to the above rubber material, other rubber materials may be used together in the rubber component. Examples include diene-based rubbers such as natural rubber (NR), polyisoprene rubber (IR), polybutadiene rubber (BR), styrene-butadiene rubber (SBR), styrene-isoprene-butadiene rubber (SIBR), ethylene-propylene-diene rubber (EPDM), chloroprene rubber (CR), and acrylonitrile-butadiene rubber (NBR) .

The rubber component may consist only of a diene-based rubber as mentioned above without butyl-based rubbers. Preferred among the diene-based rubbers is NR or BR because they provide good sealing performance so that a sealant having good retention of low-temperature sealing performance can be more suitably obtained.

The amount of NR based on 100% by mass of the rubber component is preferably 20% by mass or more, more preferably 80% by mass or more, and may be 100% by mass. The amount of BR based on 100% by mass of the rubber component is preferably 50% to 90% by mass, more preferably 60% to 80% by mass.

The sealant preferably contains a liquid polymer.

Examples of the liquid polymer in the sealant include liquid polybutene, liquid polyisobutene, liquid polyisoprene, liquid polybutadiene, liquid poly-α-olefins, liquid polyisobutylene, liquid ethylene-α-olefin copolymers, liquid ethylene-propylene copolymers, and liquid ethylene-butylene copolymers. For tackification and other properties, liquid polybutene is preferred among these. Examples of the liquid polybutene include copolymers having a long-chain hydrocarbon molecular structure which is based on isobutene and further reacted with normal butene. Hydrogenated liquid polybutene may also be used. Only a single liquid polymer may be used, or two or more liquid polymers may be used in combination.

The kinematic viscosity at 100°C of the liquid polymer (e.g. liquid polybutene) is preferably 3,540 mm²/s or higher, more preferably 3,600 mm²/s or higher, still more preferably 3,650 mm²/s or higher. If it is lower than 3,540 mm²/s, the sealant may have too low a viscosity and easily flow during service of the tire, resulting in a deterioration in sealing performance or uniformity.

The kinematic viscosity at 100°C is preferably 4, 010 mm²/s or lower, more preferably 3,900 mm²/s or lower, still more preferably 3,800 mm²/s or lower. If it is higher than 4,010 mm²/s, sealing performance may deteriorate.

The kinematic viscosity at 40°C of the liquid polymer (e.g. liquid polybutene) is preferably 120, 000 mm²/s or higher, more preferably 150, 000 mm²/s or higher. If it is lower than 120, 000 mm²/s, the sealant may have too low a viscosity and easily flow during service of the tire, resulting in a deterioration in sealing performance or uniformity.

The kinematic viscosity at 40°C is preferably 200,000 mm²/s or lower, more preferably 170, 000 mm²/s or lower. If it is higher than 200,000 mm²/s, the sealant may have too high a viscosity and deteriorated sealing performance.

The kinematic viscosity is determined at 100°C or 40°C in accordance with JIS K 2283-2000.

The amount of the liquid polymer per 100 parts by mass of the rubber component is preferably 50 parts by mass or more, more preferably 100 parts by mass or more, still more preferably 120 parts by mass or more. If the amount is less than 50 parts by mass, adhesion may decrease, and the difference in the viscosity may be insufficiently reduced. The amount is preferably 400 parts by mass or less, more preferably 350 parts by mass or less, still more preferably 300 parts by mass or less, particularly preferably 250 parts by mass or less. If the amount is more than 400 parts by mass, flowing of the sealant may occur.

With regard to the liquid polymer, preferably a single liquid polymer having kinematic viscosities at 100°C and 40°C within the above ranges is used in the above-described amount. The use of such a liquid polymer in the above-described amount contributes to reducing the difference in the viscosity, so that a sealant having good retention of low-temperature sealing performance can be more suitably obtained.

Specifically, the difference in the viscosity can be suitably adjusted to a predetermined value or less when the liquid polymer is incorporated in an amount of 100 parts by mass or more, preferably 120 parts by mass or more, per 100 parts by mass of the rubber component, and further the liquid polymer is a liquid polymer having kinematic viscosities at 100°C and 40°C within the above ranges.

Examples of crosslinking agents that can be used include organic peroxides and sulfur. Organic peroxides are preferred among these because they allow crosslinking to proceed at a moderate rate and thus are suitable for preparation using a continuous kneader such as a twin screw kneading extruder which requires a relatively short kneading time, with the result that it is possible to reduce problems such as excessive crosslinking, thereby providing better retention of low-temperature sealing performance.

Any organic peroxide (crosslinking agent) may be used including conventionally known compounds. Adhesion, sealing performance, fluidity, and processability can be improved when a butyl-based rubber and a liquid polymer are used in an organic peroxide crosslinking system.

Examples of the organic peroxide include acyl peroxides such as benzoyl peroxide, dibenzoyl peroxide, and p-chlorobenzoyl peroxide; peroxyesters such as 1-butyl peroxyacetate, t-butyl peroxybenzoate, and t-butyl peroxyphthalate; ketone peroxides such as methyl ethyl ketone peroxide; alkyl peroxides such as di-t-butyl peroxybenzoate and 1,3-bis(1-butylperoxyisopropyl)benzene; hydroperoxides such as t-butyl hydroperoxide; and dicumyl peroxide and t-butyl cumyl peroxide. In view of adhesion and fluidity, acyl peroxides are preferred among these, with dibenzoyl peroxide being particularly preferred. The organic peroxide (crosslinking agent) to be used is preferably in the form of powder. Such a powdered organic peroxide (crosslinking agent) can be precisely and suitably supplied to a continuous kneader so that the sealant can be produced with high productivity.

The amount of the organic peroxide (crosslinking agent) per 100 parts by mass of the rubber component is preferably 0.5 parts by mass or more, more preferably 1 part by mass or more, still more preferably 3 parts by mass or more. If the amount is less than 0.5 parts by mass, the crosslink density may decrease, and the difference in the viscosity may be insufficiently reduced. The amount is preferably 8 parts by mass or less, more preferably 5 parts by mass or less. If the amount is more than 8 parts by mass, the amount of unreacted organic peroxide may increase to allow a crosslinking reaction to proceed slowly even at room temperature, with the result that the difference in the viscosity may be insufficiently reduced.

The difference in the viscosity can be suitably adjusted to a predetermined value or less when the organic peroxide is incorporated in an amount of 8 parts by mass or less, preferably 5 parts by mass or less, per 100 parts by mass of the rubber component.

The amount of sulfur per 100 parts by mass of the rubber component is preferably 0.5 parts by mass or more, more preferably 1 part by mass or more. If the amount is less than 0.5 parts by mass, the crosslink density may decrease, and the difference in the viscosity may be insufficiently reduced. The amount is preferably 4 parts by mass or less, more preferably 3 parts by mass or less, still more preferably 2.5 parts by mass or less. If the amount is more than 4 parts by mass, the amount of unreacted sulfur may increase to allow a crosslinking reaction to proceed slowly even at room temperature, with the result that the difference in the viscosity may be insufficiently reduced.

The difference in the viscosity can be suitably adjusted to a predetermined value or less when the sulfur is incorporated in an amount of 4 parts by mass or less, preferably 3 parts by mass or less, more preferably 2.5 parts by mass or less, per 100 parts by mass of the rubber component.

The crosslinking activator (vulcanization accelerator) to be used may be at least one selected from the group consisting of sulfenamide, thiazole, thiuram, thiourea, guanidine, dithiocarbamate, aldehyde-amine, aldehyde-ammonia, imidazoline, and xanthate compounds, and quinone dioxime compounds (quinoid compounds). For example, quinone dioxime compounds (quinoid compounds) can be suitably used. Adhesion, sealing performance, fluidity, and processability can be improved when a butyl-based rubber and a liquid polymer are used in a crosslinking system including a crosslinking activator in addition to an organic peroxide.

Examples of the quinone dioxime compounds include p-benzoquinone dioxime, p-quinone dioxime, p-quinone dioxime diacetate, p-quinone dioxime dicaproate, p-quinone dioxime dilaurate, p-quinone dioxime distearate, p-quinone dioxime dicrotonate, p-quinone dioxime dinaphthenate, p-quinone dioxime succinate, p-quinone dioxime adipate, p-quinone dioxime difuroate, p-quinone dioxime dibenzoate, p-quinone dioxime di(o-chlorobenzoate), p-quinone dioxime di(p-chlorobenzoate), p-quinone dioxime di(p-nitrobenzoate), p-quinone dioxime di(m-nitrobenzoate), p-quinone dioxime di(3,5-dinitrobenzoate), p-quinone dioxime di(p-methoxybenzoate), p-quinone dioxime di(n-amyloxybenzoate), and p-quinone dioxime di(m-bromobenzoate) . In view of adhesion, sealing performance, and fluidity, p-benzoquinone dioxime is preferred among these. The crosslinking activator (vulcanization accelerator) to be used is preferably in the form of powder. Such a powdered crosslinking activator (vulcanization accelerator) can be precisely and suitably supplied to a continuous kneader so that the sealant can be produced with high productivity.

The amount of the crosslinking activator (e.g. quinone dioxime compounds) per 100 parts by mass of the rubber component is preferably 0.5 parts by mass or more, more preferably 1 part by mass or more, still more preferably 3 parts by mass or more. If the amount is less than 0.5 parts by mass, the difference in the viscosity may be insufficiently reduced. The amount is preferably 8 parts by mass or less, more preferably 5 parts by mass or less. If the amount is more than 8 parts by mass, the amount of unreacted quinone dioxime compound may increase so that it can interact with the organic peroxide to allow a crosslinking reaction to proceed slowly even at room temperature, with the result that the difference in the viscosity may be insufficiently reduced.

The difference in the viscosity can be suitably adjusted to a predetermined value or less when the crosslinking activator is incorporated in an amount of 8 parts by mass or less, preferably 5 parts by mass or less, per 100 parts by mass of the rubber component.

The sealant may further contain an inorganic filler such as carbon black, silica, calcium carbonate, calcium silicate, magnesium oxide, aluminum oxide, barium sulfate, talc, or mica; and/or a plasticizer such as aromatic process oils, naphthenic process oils, or paraffinic process oils.

The amount of the inorganic filler per 100 parts by mass of the rubber component is preferably 1 part by mass or more, more preferably 10 parts by mass or more. If the amount is less than 1 part by mass, sealing performance may be reduced due to degradation by ultraviolet rays. The amount is preferably 50 parts by mass or less, more preferably 40 parts by mass or less, still more preferably 30 parts by mass or less. If the amount is more than 50 parts by mass, the sealant may have too high a viscosity and deteriorated sealing performance.

In order to prevent degradation by ultraviolet rays, the inorganic filler is preferably carbon black. In this case, the amount of carbon black per 100 parts by mass of the rubber component is preferably 1 part by mass or more, more preferably 10 parts by mass or more. If the amount is less than 1 part by mass, sealing performance may be reduced due to degradation by ultraviolet rays. The amount is preferably 50 parts by mass or less, more preferably 40 parts by mass or less, still more preferably 25 parts by mass or less. If the amount is more than 50 parts by mass, the sealant may have too high a viscosity and deteriorated sealing performance.

The plasticizer (oil) is preferably dioctyl phthalate (DOP) because a plasticizer having a lower softening point is preferred to maintain the soft state at low temperatures.

Herein, the liquid polymer is excluded from the plasticizer.

The amount of the plasticizer per 100 parts by mass of the rubber component is 20 parts by mass or more. The amount is preferably 40 parts by mass or less, more preferably 30 parts by mass or less. If the amount is more than 40 parts by mass, the sealant may slide in the kneader so that it cannot be easily kneaded.

The difference in the viscosity can be suitably adjusted to a predetermined value or less when the plasticizer is incorporated in an amount of 20 parts by mass or more, per 100 parts by mass of the rubber component.

The sealant is preferably prepared by mixing a pelletized butyl-based rubber, a powdered crosslinking agent, and a powdered crosslinking activator, and more preferably by mixing a pelletized butyl-based rubber, a liquid polybutene, a plasticizer, carbon black powder, a powdered crosslinking agent, and a powdered crosslinking activator. In this case, the raw materials can be suitably supplied to a continuous kneader so that the sealant can be produced with high productivity.

The sealant preferably incorporates predetermined amounts of a liquid polymer, an organic peroxide, and a crosslinking activator with a rubber component including a butyl-based rubber.

The sealant incorporating a liquid polymer such as liquid polybutene with a butyl-based rubber can achieve a balanced improvement in adhesion, sealing performance, fluidity, and processability. This is because the introduction of a liquid polymer component to an organic peroxide crosslinking system using a butyl-based rubber as the rubber component provides adhesion, and further the use of a liquid polymer and a solid butyl-based rubber reduces flowing of the sealant during high-speed running. Therefore, the sealant can achieve a balanced improvement in adhesion, sealing performance, fluidity, and processability.

The sealant also preferably contains a rubber component including a halogenated butyl rubber and an organic peroxide because such a sealant has excellent fluidity and excellent degradation resistance.

The viscosity at 40°C of the sealant is not particularly limited. In order to allow the sealant to suitably maintain a generally string shape when it is applied to the inner periphery of a tire, and in view of adhesion, fluidity, and other properties, the viscosity at 40°C is preferably 3, 000 Pa·s or higher, more preferably 5, 000 Pa·s or higher, but is preferably 70, 000 Pa·s or lower, more preferably 50, 000 Pa·s or lower. If it is lower than 3, 000 Pa·s, the applied sealant may flow when the tire stops rotating, so that the sealant may not maintain the film thickness. If it is higher than 70,000 Pa·s, the sealant cannot be readily discharged from the nozzle.

The viscosity of the sealant is measured at 40°C in accordance with JIS K 6833 using a rotational viscometer.

A self-sealing tire including a sealant layer located radially inside an innerliner can be produced by preparing a sealant by mixing the aforementioned materials, and applying the sealant to the inner periphery of a tire, preferably to the radially inner side of the innerliner. The materials of the sealant may be mixed using a known continuous kneader, for example. In particular, they are preferably mixed using a co-rotating or counter-rotating multi-screw kneading extruder, particularly a twin screw kneading extruder.

The continuous kneader (in particular twin screw kneading extruder) preferably has a plurality of supply ports for supplying raw materials, more preferably at least three supply ports, still more preferably at least three supply ports including upstream, midstream, and downstream supply ports. By sequentially supplying the raw materials to the continuous kneader (in particular twin screw kneading extruder), the raw materials are mixed and sequentially and continuously prepared into a sealant.

Preferably, the raw materials are sequentially supplied to the continuous kneader (in particular twin screw kneading extruder), starting from the material having a higher viscosity. In this case, the materials can be sufficiently mixed and prepared into a sealant of a consistent quality. Moreover, powder materials, which improve kneadability, are desirably introduced as upstream as possible.

The organic peroxide is preferably supplied to the continuous kneader (in particular twin screw kneading extruder) through its downstream supply port. In this case, the time period from supplying the organic peroxide to applying the sealant to a tire can be shortened so that the sealant can be applied to a tire before it is cured. This enables more stable production of self-sealing tires.

Since kneading is unsuccessfully accomplished when a large amount of the liquid polymer is introduced at once into the continuous kneader (in particular twin screw kneading extruder), the liquid polymer is preferably supplied to the continuous kneader (in particular twin screw kneading extruder) through a plurality of supply ports. In this case, the sealant can be more suitably kneaded.

When a continuous kneader (in particular twin screw kneading extruder) is used, the sealant is preferably prepared using a continuous kneader (in particular twin screw kneading extruder) having at least three supply ports by supplying a rubber component such as a butyl-based rubber, an inorganic filler, and a crosslinking activator each from the upstream supply port, a liquid polymer from the midstream supply port, and an organic peroxide and a plasticizer each from the downstream supply port of the continuous kneader (in particular twin screw kneading extruder), followed by kneading and extrusion. The materials such as liquid polymers may be entirely or partially supplied from the respective supply ports . Preferably, 95% by mass or more of the total amount of each material is supplied from the supply port.

Preferably, all the raw materials to be introduced into the continuous kneader are introduced into the continuous kneader under the control of a quantitative feeder. This enables continuous and automated preparation of the sealant.

Any feeder that can provide quantitative feeding may be used, including known feeders such as screw feeders, plunger pumps, gear pumps, and mohno pumps.

Solid raw materials (especially pellets or powder) such as butyl-based rubber pellets, carbon black powder, crosslinking agent powder, and crosslinking activator powder are each preferably quantitatively supplied using a screw feeder. This allows the solid raw materials to be supplied precisely in fixed amounts, thereby enabling production of a higher quality sealant and therefore a higher quality self-sealing tire.

Moreover, the solid raw materials are preferably individually supplied through different feeders. In this case, the raw materials need not to be blended beforehand, which facilitates supply of the materials in mass production.

The plasticizer is preferably quantitatively supplied using a plunger pump. This allows the plasticizer to be supplied precisely in a fixed amount, thereby enabling production of a higher quality sealant and therefore a higher quality self-sealing tire.

The liquid polymer is preferably quantitatively supplied using a gear pump. This allows the liquid polymer to be supplied precisely in a fixed amount, thereby enabling production of a higher quality sealant and therefore a higher quality self-sealing tire.

The liquid polymer to be supplied is preferably kept under constant temperature control. The constant temperature control allows the liquid polymer to be supplied more precisely in a fixed amount. The liquid polymer to be supplied preferably has a temperature of 20°C to 90°C, more preferably 40°C to 70°C.

In view of easy mixing, extrudability, and control of the rate of curing acceleration, the mixing in the continuous kneader (in particular twin screw kneading extruder) is preferably carried out at a barrel temperature of 30°C (preferably 50°C) to 150°C.

In view of sufficient mixing, preferably, the materials supplied upstream are mixed for 1 to 3 minutes, and the materials supplied midstream are mixed for 1 to 3 minutes. The materials supplied downstream are preferably mixed for 0.5 to 2 minutes in order to avoid (control) crosslinking. The times for mixing the materials each refer to the residence time in the continuous kneader (in particular twin screw kneading extruder) from supply to discharge. For example, the time for mixing the materials supplied downstream means the residence time from when they are supplied through the downstream supply port until they are discharged.

By varying the screw rotational speed of the continuous kneader (in particular twin screw kneading extruder) or the setting of the temperature controller, it is possible to control the temperature of the sealant discharged from the outlet and therefore the rate of curing acceleration of the sealant, thereby providing good fluidity to the sealant. As the screw rotational speed of the continuous kneader (in particular twin screw kneading extruder) increases, the kneadability and material temperature increase. The screw rotational speed does not affect the discharge amount. In view of sufficient mixing and control of the rate of curing acceleration, the screw rotational speed is preferably 50 to 700 (preferably 550) rpm. In view of sufficient mixing, plasticity, and control of the rate of curing acceleration, the pressure inside the continuous kneader (in particular twin screw kneading extruder) is preferably 1.0 to 10.0 MPa.

In view of sufficient mixing and control of the rate of curing acceleration, the temperature of the sealant discharged from the outlet of the continuous kneader (in particular twin screw kneading extruder) is preferably 70°C to 150°C, more preferably 90°C to 130°C. When the temperature of the sealant is within the above range, the crosslinking reaction will begin upon the application of the sealant, and the sealant can adhere well to the inner periphery of a tire and, at the same time, the crosslinking reaction can more suitably proceed, whereby a self-sealing tire having high sealing performance can be produced. Moreover, the crosslinking step described later is not required.

The amount of the sealant discharged from the outlet of the continuous kneader (in particular twin screw kneading extruder) is determined according to the amounts of the raw materials supplied through the supply ports. The amounts of the raw materials supplied through the supply ports are not particularly limited, and a person skilled in the art can appropriately select the amounts. To suitably produce a self-sealing tire having much better uniformity and sealing performance, preferably a substantially constant amount (discharge amount) of the sealant is discharged from the outlet.

Herein, the substantially constant discharge amount means that the discharge amount varies within a range of 93% to 107%, preferably 97% to 103%, more preferably 98% to 102%, still more preferably 99% to 101%.

The outlet of the continuous kneader (in particular twin screw kneading extruder) is preferably connected to a nozzle. Since the continuous kneader (in particular twin screw kneading extruder) can discharge materials at a high pressure, the prepared sealant can be attached in a thin, generally string shape (bead shape) to a tire by means of a nozzle (preferably a small diameter nozzle creating high resistance) mounted on the outlet. Specifically, by discharging the sealant from a nozzle connected to the outlet of the continuous kneader (in particular twin screw kneading extruder) to sequentially apply it to the inner periphery of a tire, the applied sealant has a substantially constant thickness, thereby preventing a deterioration in tire uniformity. Thus, a self-sealing tire that is excellent in weight balance can be produced.

Next, for example, the mixed sealant is discharged from the nozzle connected to the outlet of the extruder such as a continuous kneader (in particular twin screw kneading extruder) to feed and apply the sealant directly to the inner periphery of a vulcanized tire, whereby a self-sealing tire can be produced. In this case, since the sealant which has been mixed in, for example, a twin screw kneading extruder and in which the crosslinking reaction in the extruder is suppressed is directly applied to the tire inner periphery, the crosslinking reaction of the sealant begins upon the application, and the sealant adheres well to the tire inner periphery and, at the same time, the crosslinking reaction suitably proceeds. Thus, the sealant applied to the tire inner periphery forms a sealant layer while suitably maintaining a generally string shape. Accordingly, the sealant can be applied and processed in a series of steps with further improved productivity. Moreover, since the sealant is applied to the inner periphery of a vulcanized tire, the productivity of self-sealing tires is further enhanced. Furthermore, the sealant discharged from the nozzle connected to the outlet of the continuous kneader (in particular twin screw kneading extruder) is preferably sequentially applied directly to the tire inner periphery. In this case, since the sealant in which the crosslinking reaction in the continuous kneader (in particular twin screw kneading extruder) is suppressed is directly and continuously applied to the tire inner periphery, the crosslinking reaction of the sealant begins upon the application, and the sealant adheres well to the tire inner periphery and, at the same time, the crosslinking reaction suitably proceeds. Thus, a self-sealing tire that is excellent in weight balance can be produced with higher productivity.

With regard to the application of the sealant to the inner periphery of a tire, the sealant may be applied at least to the tire inner periphery that corresponds to a tread portion, more preferably at least to the tire inner periphery that corresponds to a breaker. Omitting the application of the sealant to areas where the sealant is unnecessary further enhances the productivity of self-sealing tires.

The tire inner periphery that corresponds to a tread portion refers to a portion of the inner periphery of a tire that is located radially inside a tread portion which contacts the road surface. The tire inner periphery that corresponds to a breaker refers to a portion of the inner periphery of a tire that is located radially inside a breaker. The breaker refers to a component placed inside the tread and radially outside the carcass. Specifically, it is a component shown as breaker 16 in Fig. 9, for example.

Unvulcanized tires are usually vulcanized using bladders. During the vulcanization, such a bladder inflates and closely attaches to the inner periphery (innerliner) of the tire. Hence, a mold release agent is usually applied to the inner periphery (innerliner) of the tire to avoid adhesion between the bladder and the inner periphery (innerliner) of the tire after completion of the vulcanization.

The mold release agent is usually a water-soluble paint or a mold-releasing rubber. However, the presence of the mold release agent on the inner periphery of the tire may impair the adhesion between the sealant and the inner periphery of the tire. For this reason, it is preferred to previously remove the mold release agent from the inner periphery of the tire. In particular, the mold release agent is more preferably previously removed at least from a portion of the tire inner periphery in which application of the sealant starts. Still more preferably, the mold release agent is previously removed from the entire area of the tire inner periphery where the sealant is to be applied. In this case, the sealant can adhere better to the tire inner periphery, and therefore a self-sealing tire having higher sealing performance can be produced.

The mold release agent may be removed from the tire inner periphery by any method, including known methods such as buffing treatment, laser treatment, high pressure water washing, and removal with detergents and preferably with neutral detergents.

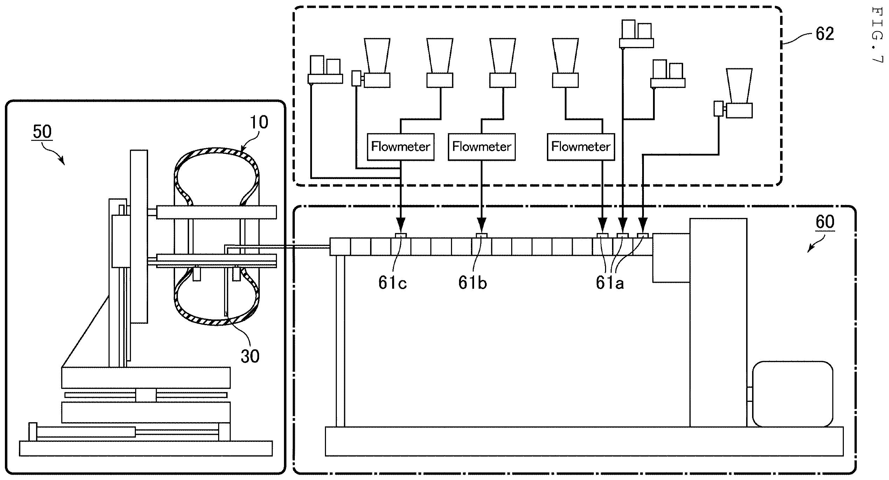

An example of a production facility used in the method for producing a self-sealing tire will be briefly described below referring to Fig. 7.

The production facility includes a twin screw kneading extruder 60, a material feeder 62 for supplying raw materials to the twin screw kneading extruder 60, and a rotary drive device 50 which fixes and rotates a tire 10 while moving the tire in the width and radial directions of the tire. The twin screw kneading extruder 60 has five supply ports 61, specifically, including three upstream supply ports 61a, one midstream supply port 61b, and one downstream supply port 61c. Further, the outlet of the twin screw kneading extruder 60 is connected to a nozzle 30.

The raw materials are sequentially supplied from the material feeder 62 to the twin screw kneading extruder 60 through the supply ports 61 of the twin screw kneading extruder 60 and then kneaded in the twin screw kneading extruder 60 to sequentially prepare a sealant. The prepared sealant is continuously discharged from the nozzle 30 connected to the outlet of the twin screw kneading extruder 60. The tire is traversed and/or moved up and down (or moved in the width direction and/or the radial direction of the tire) while being rotated by the tire drive device, and the sealant discharged from the nozzle 30 is sequentially applied directly to the inner periphery of the tire, whereby the sealant can be continuously and spirally attached to the tire inner periphery. In other words, the sealant can be continuously and spirally attached to the inner periphery of a tire by sequentially applying the sealant continuously discharged from the continuous kneader (in particular twin screw kneading extruder) directly to the inner periphery of the tire while rotating the tire and simultaneously moving it in the width direction and/or the radial direction of the tire.

Such a continuous and spiral attachment of the sealant to the tire inner periphery can prevent a deterioration in tire uniformity, thereby enabling production of a self-sealing tire that is excellent in weight balance. Moreover, the continuous and spiral attachment of the sealant to the tire inner periphery enables the formation of a sealant layer in which the sealant is uniformly provided in the circumferential and width directions of the tire, especially in the circumferential direction of the tire, thereby enabling stable production of self-sealing tires having excellent sealing performance with high productivity. The sealant is preferably attached without overlapping in the width direction and more preferably without gaps. In this case, the deterioration in tire uniformity can be further prevented, and a more uniform sealant layer can be formed.

The raw materials are sequentially supplied to the continuous kneader (in particular twin screw kneading extruder) which sequentially prepares a sealant. The prepared sealant is continuously discharged from the nozzle connected to the outlet of the continuous kneader (in particular twin screw kneading extruder) and sequentially applied directly to the inner periphery of the tire. Thus, self-sealing tires can be produced with high productivity.

The sealant layer is preferably formed by continuously and spirally applying a generally string-shaped sealant to the inner periphery of a tire. In this case, a sealant layer formed of a generally string-shaped sealant provided continuously and spirally along the inner periphery of a tire can be formed on the inner periphery of the tire. The sealant layer may be formed of layers of the sealant, but preferably consists of one layer of the sealant.

In the case of a generally string-shaped sealant, a sealant layer consisting of one layer of the sealant can be formed by continuously and spirally applying the sealant to the inner periphery of a tire. In the case of a generally string-shaped sealant, since the applied sealant has a certain thickness, even a sealant layer consisting of one layer of the sealant can prevent a deterioration in tire uniformity, and therefore a self-sealing tire having an excellent weight balance and good sealing performance can be produced. Moreover, since it is sufficient to apply only one layer of the sealant without stacking layers of the sealant, self-sealing tires can be produced with higher productivity.

As described above, a pneumatic tire (self-sealing tire) including a sealant layer having excellent retention of low-temperature sealing performance can be produced in a stable manner with high productivity by using, as a sealant, the rubber composition for sealants (sealant) of the present invention which has the predetermined viscosity characteristics and continuously and spirally applying the sealant having a generally string shape to the inner periphery of a tire to form a sealant layer.

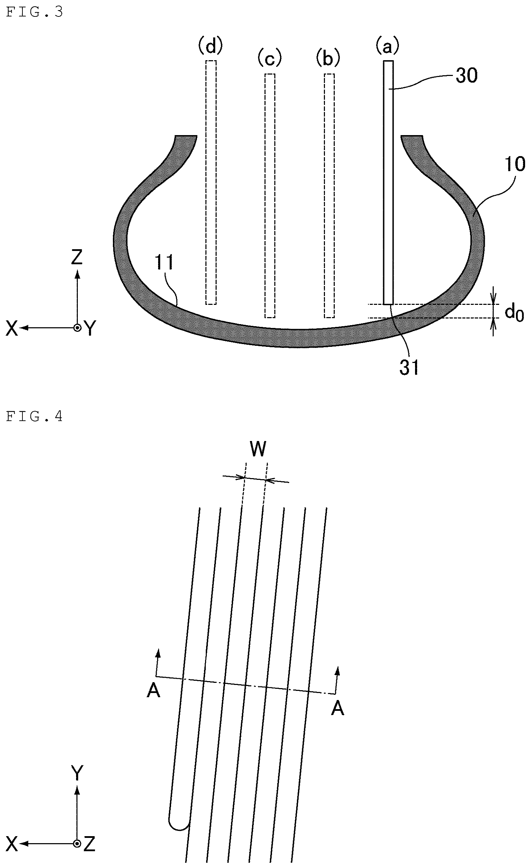

The number of turns of the sealant around the inner periphery of the tire is preferably 20 to 70, more preferably 20 to 60, still more preferably 35 to 50, because in this case a deterioration in tire uniformity can be prevented, and a self-sealing tire having an excellent weight balance and good sealing performance can be produced with higher productivity. Here, two turns mean that the sealant is applied such that it makes two laps around the inner periphery of the tire. In Fig. 4, the number of turns of the sealant is six.

Preparation (kneading) of a sealant and discharge (application) of the sealant can be simultaneously and continuously performed by using a continuous kneader (in particular twin screw kneading extruder). Thus, a highly viscous and adhesive sealant which is difficult to handle can be directly applied to the inner periphery of a tire without handling it, so that self-sealing tires can be produced with high productivity. If a sealant is prepared by kneading with a curing agent in a batch kneader, the time period from preparing a sealant to attaching the sealant to a tire is not constant. In contrast, by sequentially preparing a sealant by mixing raw materials including an organic peroxide using a continuous kneader (in particular twin screw kneading extruder), and sequentially applying the sealant to the inner periphery of a tire, the time period from preparing a sealant to attaching the sealant to a tire is held constant. Accordingly, when the sealant is applied through a nozzle, the amount of the sealant discharged from the nozzle is stable; furthermore, the sealant shows consistent adhesion to the tire while the deterioration in the adhesion is reduced, and thus even a highly viscous and adhesive sealant which is difficult to handle can be precisely applied to the tire inner periphery. This results in stable production of self-sealing tires of a consistent quality.

The following describes methods for applying the sealant to the inner periphery of a tire.

### <First embodiment>

According to a first embodiment, for example, a self-sealing tire can be produced by performing the steps (1), (2), and (3) below in the process of applying an adhesive sealant through a nozzle to the inner periphery of a tire while rotating the tire and simultaneously moving at least one of the tire and nozzle in the width direction of the tire: step (1) of measuring the distance between the inner periphery of the tire and the tip of the nozzle using a non-contact displacement sensor; step (2) of moving at least one of the tire and nozzle in the radial direction of the tire according to the measurement to adjust the distance between the inner periphery of the tire and the tip of the nozzle to a predetermined length; and step (3) of applying the sealant to the inner periphery of the tire after the distance is adjusted.

The distance between the inner periphery of the tire and the tip of the nozzle can be maintained at a constant length by measuring the distance between the inner periphery of the tire and the tip of the nozzle using a non-contact displacement sensor and feeding back the measurement. Moreover, since the sealant is applied to the tire inner periphery while maintaining the distance at a constant length, the applied sealant can have a uniform thickness without being affected by variations in tire shape and irregularities at joint or other portions. Furthermore, since it is not necessary to enter the coordinate data of each tire having a different size as in the conventional art, the sealant can be efficiently applied.

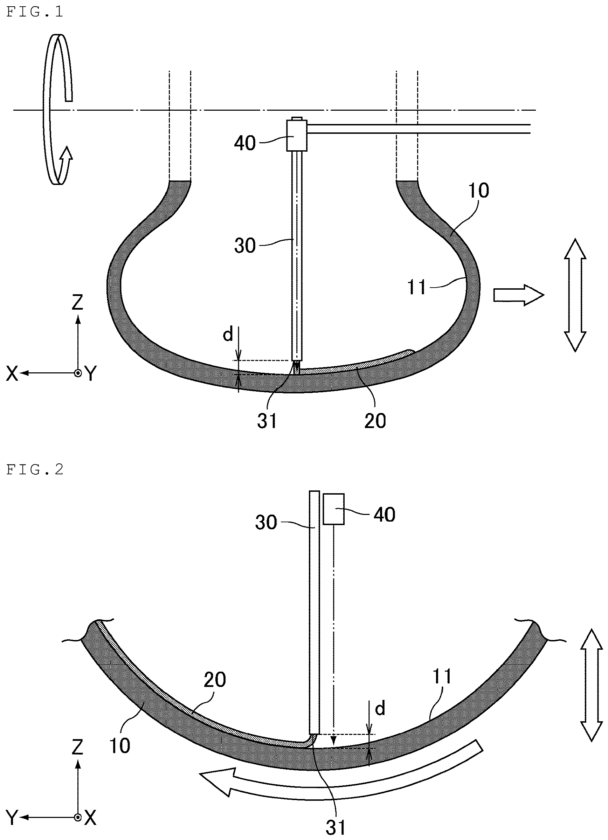

Fig. 1 is an explanatory view schematically showing an example of an applicator used in a method for producing a self-sealing tire. Fig. 2 is an enlarged view showing the vicinity of the tip of the nozzle included in the applicator shown in Fig. 1.

Fig. 1 shows a cross-section of a part of a tire 10 in the meridional direction (a cross-section taken along a plane including the width and radial directions of the tire) . Fig. 2 shows a cross-section of a part of the tire 10 taken along a plane including the circumferential and radial directions of the tire. In Figs. 1 and 2, the width direction (axis direction) of the tire is indicated by arrow X, the circumferential direction of the tire is indicated by arrow Y, and the radial direction of the tire is indicated by arrow Z.

The tire 10 is mounted on a rotary drive device (not shown) which fixes and rotates a tire while moving the tire in the width and radial directions of the tire. The rotary drive device allows the following operations to be independently performed: rotation around the axis of the tire, movement in the width direction of the tire, and movement in the radial direction of the tire.

The rotary drive device includes a controller (not shown) capable of controlling the amount of movement in the tire radial direction. The controller may be capable of controlling the amount of movement in the tire width direction and/or the rotational speed of the tire.

A nozzle 30 is attached to the tip of an extruder (not shown) and can be inserted into the inside of the tire 10. Then an adhesive sealant 20 extruded from the extruder is discharged from the tip 31 of the nozzle 30.

A non-contact displacement sensor 40 is attached to the nozzle 30 to measure the distance d between the inner periphery 11 of the tire 10 and the tip 31 of the nozzle 30.

Thus, the distance d to be measured by the non-contact displacement sensor is the distance in the tire radial direction between the inner periphery of the tire and the tip of the nozzle.

According to the method for producing a self-sealing tire of this embodiment, the tire 10 formed through a vulcanization step is first mounted on the rotary drive device, and the nozzle 30 is inserted into the inside of the tire 10. Then, as shown in Figs. 1 and 2, the tire 10 is rotated and simultaneously moved in the width direction while the sealant 20 is discharged from the nozzle 30, whereby the sealant is continuously applied to the inner periphery 11 of the tire 10. The tire 10 is moved in the width direction according to the pre-entered profile of the inner periphery 11 of the tire 10.

The sealant 20 preferably has a generally string shape as described later. More specifically, the sealant preferably maintains a generally string shape when it is applied to the inner periphery of the tire. In this case, the generally string-shaped sealant 20 is continuously and spirally attached to the inner periphery 11 of the tire 10.

The generally string shape as used herein refers to a shape having a certain width, a certain thickness, and a length longer than the width. Fig. 4 schematically shows an example of a generally string-shaped sealant continuously and spirally attached to the inner periphery of a tire, and Fig. 8 schematically shows an example of a cross-section of the sealant shown in Fig. 4 when the sealant is cut along the straight line A-A orthogonal to the direction along which the sealant is applied (longitudinal direction). As illustrated, the generally string-shaped sealant has a certain width (length indicated by W in Fig. 8) and a certain thickness (length indicated by D in Fig. 8). The width of the sealant means the width of the applied sealant. The thickness of the sealant means the thickness of the applied sealant, more specifically the thickness of the sealant layer.

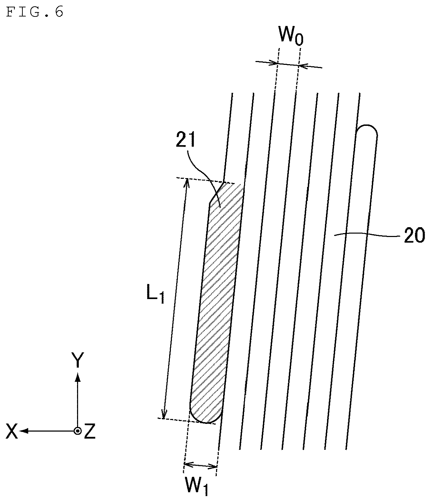

Specifically, the generally string-shaped sealant is a sealant having a thickness (thickness of the applied sealant or the sealant layer, length indicated by D in Fig. 8) satisfying a preferable numerical range and a width (width of the applied sealant, length indicated by W in Fig. 4 or W₀ in Fig. 6) satisfying a preferable numerical range as described later, or more preferably a sealant having a ratio of the thickness to the width of the sealant [(thickness of sealant)/(width of sealant)] satisfying a preferable numerical range as described later. The generally string-shaped sealant is also a sealant having a cross-sectional area satisfying a preferable numerical range as described later.

According to the method for producing a self-sealing tire of this embodiment, the sealant is applied to the inner periphery of a tire by the following steps (1) to (3).

### <Step (1)>

As shown in Fig. 2, the distance d between the inner periphery 11 of the tire 10 and the tip 31 of the nozzle 30 is measured with the non-contact displacement sensor 40 before the application of the sealant 20. The distance d is measured upon every application of the sealant 20 to the inner periphery 11 of each tire 10, from the start to the end of the application of the sealant 20.

### <Step (2)>

The distance d data is transmitted to the controller of the rotary drive device. According to the data, the controller controls the amount of movement in the tire radial direction so that the distance between the inner periphery 11 of the tire 10 and the tip 31 of the nozzle 30 is adjusted to a predetermined length.

### <Step (3)>

The sealant 20 is continuously discharged from the tip 31 of the nozzle 30, whereby it is applied to the inner periphery 11 of the tire 10 in which the above distance has been adjusted. Through the above steps (1) to (3), the sealant 20 can be applied with a uniform thickness to the inner periphery 11 of the tire 10.

Fig. 3 is an explanatory view schematically showing the positional relationship of the nozzle to the tire.

As shown in Fig. 3, the sealant can be applied while maintaining the distance between the inner periphery 11 of the tire 10 and the tip 31 of the nozzle 30 at a predetermined distance (do) during the movement of the nozzle 30 to positions (a) to (d) relative to the tire 10.

To provide more suitable effects, the adjusted distance d₀ is preferably 0.3 mm or more, more preferably 1.0 mm or more. If the distance is less than 0.3 mm, the tip of the nozzle may be too close to the inner periphery of the tire, which can make it difficult to allow the applied sealant to have a predetermined thickness. The adjusted distance d₀ is also preferably 3.0 mm or less, more preferably 2.0 mm or less. If the distance is more than 3.0 mm, the sealant may not be attached well to the tire, thereby resulting in reduced production efficiency.

The adjusted distance d₀ refers to the distance in the tire radial direction between the inner periphery of the tire and the tip of the nozzle after the distance is adjusted in step (2) .

To provide more suitable effects, the adjusted distance d₀ is preferably 30% or less, more preferably 20% or less of the thickness of the applied sealant. The adjusted distance d₀ is also preferably 5% or more, more preferably 10% or more of the thickness of the applied sealant.

The thickness of the sealant (thickness of the applied sealant or the sealant layer, length indicated by D in Fig. 8) is not particularly limited. In order to provide more suitable effects, the thickness of the sealant is preferably 1.0 mm or more, more preferably 1.5 mm or more, still more preferably 2.0 mm or more, particularly preferably 2.5 mm or more, but is preferably 10 mm or less, more preferably 8.0 mm or less, still more preferably 5.0 mm or less. If the thickness is less than 1.0 mm, a puncture hole, if formed in the tire, may be difficult to reliably seal. Also, a thickness of more than 10 mm is not preferred because the tire weight increases, though little improvement will be produced in the effect of sealing puncture holes. The thickness of the sealant can be controlled by varying the rotational speed of the tire, the velocity of movement in the tire width direction, the distance between the tip of the nozzle and the inner periphery of the tire, or other factors.

The sealant preferably has a substantially constant thickness (thickness of the applied sealant or the sealant layer) . In this case, the deterioration in tire uniformity can be further prevented, and a self-sealing tire having a much better weight balance can be produced.

The substantially constant thickness as used herein means that the thickness varies within a range of 90% to 110%, preferably 95% to 105%, more preferably 98% to 102%, still more preferably 99% to 101%.

In order to reduce clogging of the nozzle so that excellent operational stability can be obtained and to provide more suitable effects, it is preferred to use a generally string-shaped sealant, and more preferably to spirally attach a generally string-shaped sealant to the inner periphery of the tire. However, a sealant not having a generally string shape may also be used and applied by spraying onto the tire inner periphery.

In the case of a generally string-shaped sealant, the width of the sealant (width of the applied sealant, length indicated by W in Fig. 4) is not particularly limited. In order to provide more suitable effects, the width of the sealant is preferably 0.8 mm or more, more preferably 1.3 mm or more, still more preferably 1.5 mm or more. If the width is less than 0.8 mm, the number of turns of the sealant around the tire inner periphery may increase, reducing production efficiency. The width of the sealant is also preferably 18 mm or less, more preferably 13 mm or less, still more preferably 9.0 mm or less, particularly preferably 7.0 mm or less, most preferably 6.0 mm or less, still most preferably 5.0 mm or less. If the width is more than 18 mm, a weight imbalance may be more likely to occur.

The ratio of the thickness of the sealant (the thickness of the applied sealant or the sealant layer, length indicated by D in Fig. 8) to the width of the sealant (the width of the applied sealant, length indicated by W in Fig. 4) [(thickness of sealant) / (width of sealant)] is preferably 0.6 to 1.4, more preferably 0.7 to 1.3, still more preferably 0.8 to 1.2, particularly preferably 0.9 to 1.1. A sealant having a ratio closer to 1.0 has a shape closer to an ideal string shape so that a self-sealing tire having high sealing performance can be produced with higher productivity.

To provide more suitable effects, the cross-sectional area of the sealant (the cross-sectional area of the applied sealant, area calculated by D × W in Fig. 8) is preferably 0.8 mm² or more, more preferably 1.95 mm² or more, still more preferably 3.0 mm² or more, particularly preferably 3.75 mm² or more, but is preferably 180 mm² or less, more preferably 104 mm² or less, still more preferably 45 mm² or less, particularly preferably 35 mm² or less, most preferably 25 mm² or less.

The width of the area where the sealant is attached (hereinafter also referred to as the width of the attachment area or the width of the sealant layer, and corresponding to a length equal to 6 × W in Fig. 4 or a length equal to W₁ + 6 × W₀ in Fig. 6) is not particularly limited. In order to provide more suitable effects, the width is preferably 80% or more, more preferably 90% or more, still more preferably 100% or more, but is preferably 120% or less, more preferably 110% or less, of the tread contact width.

To provide more suitable effects, the width of the sealant layer is preferably 85% to 115%, more preferably 95% to 105% of the width of the breaker of the tire (the length of the breaker in the tire width direction).

Herein, in cases where the tire is provided with a plurality of breakers, the length of the breaker in the tire width direction refers to the length in the tire width direction of the breaker that is the longest in the tire width direction, among the plurality of breakers.

Herein, the tread contact width is determined as follows. First, a no-load and normal-condition tire with a normal internal pressure mounted on a normal rim is contacted with a plane at a camber angle of 0 degrees while a normal load is applied to the tire, and then the axially outermost contact positions of the tire are each defined as "contact edge Te". The distance in the tire axis direction between the contact edges Te and Te is defined as "tread contact width TW". The dimensions and other characteristics of tire components are determined under the above normal conditions, unless otherwise stated.

The "normal rim" refers to a rim specified for each tire by the standards in a standard system including standards according to which tires are provided, and may be "standard rim" in JATMA, "design rim" in TRA, or "measuring rim" in ETRTO. The "normal internal pressure" refers to an air pressure specified for each tire by the standards in a standard system including standards according to which tires are provided, and may be "maximum air pressure" in JATMA, a maximum value shown in Table "TIRE LOAD LIMITS AT VARIOUS COLD INFLATION PRESSURES" in TRA, or "inflation pressure" in ETRTO. In the case of tires for passenger vehicles, the normal internal pressure is 180 kPa.

The "normal load" refers to a load specified for each tire by the standards in a standard system including standards according to which tires are provided, and may be "maximum load capacity" in JATMA, a maximum value shown in Table "TIRE LOAD LIMITS AT VARIOUS COLD INFLATION PRESSURES" in TRA, or "load capacity" in ETRTO. In the case of tires for passenger vehicles, the normal load is 88% of the above-specified load.

The rotational speed of the tire during the application of the sealant is not particularly limited. In order to provide more suitable effects, the rotational speed is preferably 5 m/min or higher, more preferably 10 m/min or higher, but is preferably 30 m/min or lower, more preferably 20 m/min or lower. If the rotational speed is lower than 5 m/min or higher than 30 m/min, it may be difficult for the applied sealant to have a uniform thickness.

When a non-contact displacement sensor is used, the risk of troubles caused by adhesion of the sealant to the sensor can be reduced. Any non-contact displacement sensor may be used as long as it can measure the distance between the inner periphery of the tire and the tip of the nozzle. Examples include laser sensors, photosensors, and capacitance sensors. These sensors may be used alone or in combinations of two or more. For measurement of rubber, laser sensors or photosensors are preferred, with laser sensors being more preferred. When a laser sensor is used, the distance between the inner periphery of the tire and the tip of the nozzle can be determined as follows: the inner periphery of the tire is irradiated with a laser; the distance between the inner periphery of the tire and the tip of the laser sensor is determined based on the reflection of the laser; and the distance between the tip of the laser sensor and the tip of the nozzle is subtracted from the determined distance.

The location of the non-contact displacement sensor is not particularly limited as long as the distance between the inner periphery of the tire and the tip of the nozzle before the application of the sealant can be measured. The sensor is preferably attached to the nozzle, more preferably in a location to which the sealant will not adhere.

The number, size, and other conditions of the non-contact displacement sensor are also not particularly limited.

Since the non-contact displacement sensor is vulnerable to heat, the sensor is preferably protected with a heat insulator or the like and/or cooled with air or the like to avoid the influence of heat from the hot sealant discharged from the nozzle. This improves the durability of the sensor.

Although the first embodiment has been described based on an example in which the tire, not the nozzle, is moved in the width and radial directions of the tire, the nozzle, not the tire, may be moved, or both the tire and the nozzle may be moved.

The rotary drive device preferably includes a means to increase the width of a tire at a bead portion. In the application of the sealant to a tire, increasing the width of the tire at a bead portion allows the sealant to be easily applied to the tire. Particularly when the nozzle is introduced near the inner periphery of the tire mounted on the rotary drive device, the nozzle can be introduced only by parallel movement of the nozzle, which facilitates the control and improves productivity.

Any means that can increase the width of a tire at a bead portion can be used as the means to increase the width of a tire at a bead portion. Examples include a mechanism in which two devices each having a plurality of (preferably two) rolls which have a fixed positional relationship with each other are used, and the devices move in the tire width direction. The devices may be inserted from both sides through the opening of the tire into the inside and allowed to increase the width of the tire at a bead portion.

In the production method, since the sealant which has been mixed in, for example, a twin screw kneading extruder and in which the crosslinking reaction in the extruder is suppressed is directly applied to the tire inner periphery, the crosslinking reaction begins upon the application and the sealant adheres well to the tire inner periphery and, at the same time, the crosslinking reaction more suitably proceeds, so that a self-sealing tire having high sealing performance can be produced. Thus, the self-sealing tire with the sealant applied thereto does not need further crosslinking, thereby offering good productivity.

The self-sealing tire with the sealant applied thereto may be further subjected to a crosslinking step, if necessary.

The self-sealing tire is preferably heated in the crosslinking step. This improves the rate of crosslinking of the sealant and allows the crosslinking reaction to more suitably proceed so that the self-sealing tire can be produced with higher productivity. The tire may be heated by any method, including known methods, but it may suitably be heated in an oven. The crosslinking step may be carried out, for example, by placing the self-sealing tire in an oven at 70°C to 190°C, preferably 150°C to 190°C, for 2 to 15 minutes.

The tire is preferably rotated in the circumferential direction of the tire during the crosslinking because this prevents flowing of even the just-applied, easily flowing sealant and allows the crosslinking reaction to be accomplished without deterioration in uniformity. The rotational speed is preferably 300 to 1,000 rpm. Specifically, the oven used may be, for example, an oven equipped with a rotational mechanism.

Even when the crosslinking step is not additionally performed, the tire is preferably rotated in the circumferential direction of the tire until the crosslinking reaction of the sealant is completed. This prevents flowing of even the just-applied, easily flowing sealant and allows the crosslinking reaction to be accomplished without deterioration in uniformity. The rotational speed is the same as described for the crosslinking step.

To improve the rate of crosslinking of the sealant, the tire is preferably previously warmed before the application of the sealant. In this case, self-sealing tires can be produced with higher productivity. The temperature for pre-heating the tire is preferably 40°C to 100°C, more preferably 50°C to 70°C. When the tire is pre-heated within the above temperature range, the crosslinking reaction suitably begins upon the application and more suitably proceeds so that a self-sealing tire having high sealing performance can be produced. Moreover, when the tire is pre-heated within the above temperature range, the crosslinking step is not required, and thus self-sealing tires can be produced with high productivity.

In general, continuous kneaders (in particular twin screw kneading extruders) are continuously operated. In the production of self-sealing tires, however, tires need to be replaced one after another upon completion of the application of the sealant to one tire. Here, in order to produce higher quality self-sealing tires while reducing the deterioration in productivity, the following method (1) or (2) may be used. The method (1) or (2) may be appropriately selected depending on the situation, in view of the following disadvantages: deterioration in quality in method (1) ; and an increase in cost in method (2).
(1) The feed of the sealant to the inner periphery of the tire is controlled by running or stopping the continuous kneader and all the feeders simultaneously.
   Specifically, upon completion of the application to one tire, the continuous kneader and all the feeders may be simultaneously stopped, the tire may be replaced with another tire, preferably within one minute, and then the continuous kneader and all the feeders may be simultaneously allowed to run to restart the application to the tire. By replacing tires quickly, preferably within one minute, the deterioration in quality can be reduced.
(2) The feed of the sealant to the inner periphery of the tire is controlled by switching flow channels while allowing the continuous kneader and all the feeders to keep running.
   Specifically, the continuous kneader may be provided with another flow channel in addition to the nozzle for direct feeding to the tire inner periphery, and the prepared sealant may be discharged from the another flow channel after completion of the application to one tire until completion of the replacement of tires. According to this method, since self-sealing tires can be produced while the continuous kneader and all the feeders are kept running, the produced self-sealing tires can have higher quality.

Non-limiting examples of carcass cords that can be used in the carcass of the self-sealing tire described above include fiber cords and steel cords. Steel cords are preferred among these. In particular, steel cords formed of hard steel wire materials specified in JIS G 3506 are desirable. The use of strong steel cords, instead of commonly used fiber cords, as carcass cords in the self-sealing tire can greatly improve side cut resistance (resistance to cuts formed in the tire side portions due to driving over curbs or other reasons) and thereby further improve the puncture resistance of the entire tire including the side portions.

The steel cord may have any structure. Examples include steel cords having a 1 × n single strand structure, steel cords having a k + m layer strand structure, steel cords having a 1 × n bundle structure, and steel cords having an m × n multi-strand structure. The term "steel cord having a 1 × n single strand structure" refers to a single-layered twisted steel cord formed by intertwining n filaments. The term "steel cord having a k + m layer strand structure" refers to a steel cord having a two-layered structure in which the two layers are different from each other in twist direction and twist pitch, and the inner layer includes k filaments while the outer layer includes m filaments . The term "steel cord having a 1 × n bundle structure" refers to a bundle steel cord formed by intertwining bundles of n filaments. The term "steel cord having an m × n multi-strand structure" refers to a multi-strand steel cord formed by intertwining m strands each produced by first twisting n filaments together. Here, n represents an integer of 1 to 27; k represents an integer of 1 to 10; and m represents an integer of 1 to 3.

The twist pitch of the steel cord is preferably 13 mm or less, more preferably 11 mm or less, but is preferably 5 mm or more, more preferably 7 mm or more.

The steel cord preferably contains at least one preformed filament formed in the shape of a spiral. Such a preformed filament provides a relatively large gap within the steel cord to improve rubber permeability and also maintain the elongation under low load, thereby possibly preventing a molding failure during vulcanization.

The surface of the steel cord is preferably plated with brass, Zn, or other materials to improve initial adhesion to the rubber composition.

The steel cord preferably has an elongation of 0.5% to 1.5% under a load of 50 N. If the elongation under a load of 50 N is more than 1.5%, the reinforcing cords may exhibit reduced elongation under high load, and the disturbance absorption may not be maintained. Conversely, if the elongation under a load of 50 N is less than 0.5%, the cords may not show sufficient elongation during vulcanization, thereby possibly resulting in a molding failure. In view of the above, the elongation under a load of 50 N is more preferably 0.7% or more, but is more preferably 1.3% or less.

The endcount of the steel cords is preferably 20 to 50 (ends/5 cm).

### <Second embodiment>

The studies of the present inventor have further revealed that the use of the method according to the first embodiment alone has the following disadvantage: a sealant having a generally string shape is occasionally difficult to attach to the inner periphery of a tire and can easily peel off particularly at the attachment-starting portion. A second embodiment of the method for producing a self-sealing tire is characterized in that the sealant is attached under conditions where the distance between the inner periphery of the tire and the tip of the nozzle is adjusted to a distance d₁ and then to a distance d₂ larger than the distance d₁. In this case, since the distance between the inner periphery of the tire and the tip of the nozzle is shortened at the beginning of the attachment, the width of the sealant corresponding to the attachment-starting portion can be increased. As a result, a self-sealing tire can be easily produced in which a generally string-shaped adhesive sealant is continuously and spirally attached at least to the tire inner periphery that corresponds to a tread portion, and at least one of the longitudinal ends of the sealant forms a wider portion having a width larger than that of the longitudinally adjoining portion. In this self-sealing tire, a portion of the sealant which corresponds to the attachment-starting portion has a larger width to improve adhesion of this portion so that peeling of this portion of the sealant can be prevented.

The description of the second embodiment basically includes only features different from the first embodiment, and the contents overlapping the description of the first embodiment are omitted.

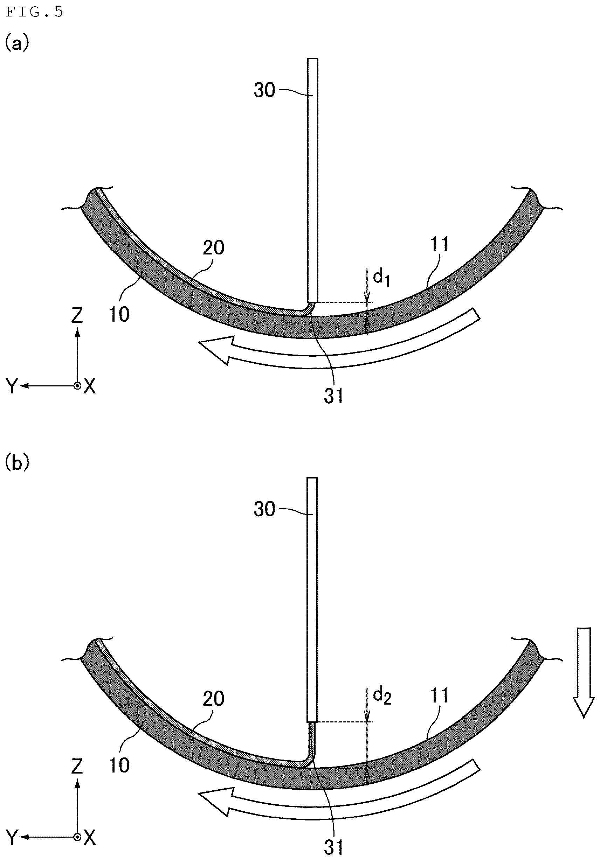

Figs. 5 are enlarged views showing the vicinity of the tip of the nozzle included in the applicator shown in Fig. 1. Fig. 5(a) illustrates that immediately after starting the attachment of the sealant, and Fig. 5 (b) illustrates that after a lapse of a predetermined time.

Figs. 5 each show a cross-section of a part of a tire 10 taken along a plane including the circumferential and radial directions of the tire. In Figs. 5, the width direction (axis direction) of the tire is indicated by arrow X, the circumferential direction of the tire is indicated by arrow Y, and the radial direction of the tire is indicated by arrow Z.

In the second embodiment, the tire 10 formed through a vulcanization step is first mounted on a rotary drive device, and a nozzle 30 is inserted into the inside of the tire 10. Then, as shown in Figs. 1 and 5, the tire 10 is rotated and simultaneously moved in the width direction while a sealant 20 is discharged from the nozzle 30, whereby the sealant is continuously applied to the inner periphery 11 of the tire 10. The tire 10 is moved in the width direction according to, for example, the pre-entered profile of the inner periphery 11 of the tire 10.

Since the sealant 20 is adhesive and has a generally string shape, the sealant will be continuously and spirally attached to the inner periphery 11 of the tire 10 which corresponds to a tread portion.

In this process, as shown in Fig. 5(a), the sealant 20 is attached under conditions where the distance between the inner periphery 11 of the tire 10 and the tip 31 of the nozzle 30 is adjusted to a distance d₁ for a predetermined time from the start of the attachment. Then, after a lapse of the predetermined time, as shown in Fig. 5 (b), the tire 10 is moved in the radial direction to change the distance to a distance d₂ larger than the distance d₁, and then the sealant 20 is attached.

The distance may be changed from the distance d₂ back to the distance d₁ before completion of the attachment of the sealant. In view of production efficiency and tire weight balance, the distance d₂ is preferably maintained until the sealant attachment is completed.

Preferably, the distance d₁ is kept constant for a predetermined time from the start of the attachment, and after a lapse of the predetermined time the distance d₂ is kept constant. However, it is not necessary for the distances d₁ and d₂ to be constant as long as they satisfy the relation of d₁ < d₂.

The distance d₁ is not particularly limited. In order to provide more suitable effects, the distance d₁ is preferably 0.3 mm or more, more preferably 0.5 mm or more. If the distance d₁ is less than 0.3 mm, the tip of the nozzle is too close to the inner periphery of the tire, so that the sealant can easily adhere to the nozzle, thereby necessitating more frequent cleaning of the nozzle. The distance d₁ is also preferably 2 mm or less, more preferably 1 mm or less. If the distance d₁ is more than 2 mm, the effect produced by the formation of a wider portion may be insufficient.

The distance d₂ is also not particularly limited. To provide more suitable effects, the distance d₂ is preferably 0.3 mm or more, more preferably 1 mm or more, but is preferably 3 mm or less, more preferably 2 mm or less. The distance d₂ is preferably the same as the adjusted distance d₀ described above.

Herein, the distances d₁ and d₂ between the inner periphery of the tire and the tip of the nozzle each refer to the distance in the tire radial direction between the inner periphery of the tire and the tip of the nozzle.

The rotational speed of the tire during the attachment of the sealant is not particularly limited. To provide more suitable effects, the rotational speed is preferably 5 m/min or higher, more preferably 10 m/min or higher, but is preferably 30 m/min or lower, more preferably 20 m/min or lower. If the rotational speed is lower than 5 m/min or higher than 30 m/min, it may be difficult for the attached sealant to have a uniform thickness.

The self-sealing tire according to the second embodiment can be produced through the steps described above.

Fig. 6 is an explanatory view schematically showing an example of a sealant attached to a self-sealing tire according to the second embodiment.

The generally string-shaped sealant 20 is wound in the circumferential direction of the tire and continuously and spirally attached. Here, one of the longitudinal ends of the sealant 20 forms a wider portion 21 having a width larger than that of the longitudinally adjoining portion. The wider portion 21 corresponds to the attachment-starting portion of the sealant.

The width of the wider portion of the sealant (the width of the wider portion of the applied sealant, length indicated by W₁ in Fig. 6) is not particularly limited. To provide more suitable effects, the width of the wider portion is preferably 103% or more, more preferably 110% or more, still more preferably 120% or more of the width of the sealant other than the wider portion (length indicated by W₀ in Fig. 6). If it is less than 103%, the effect produced by the formation of a wider portion may be insufficient. The width of the wider portion of the sealant is also preferably 210% or less, more preferably 180% or less, still more preferably 160% or less of the width of the sealant other than the wider portion. If it is more than 210%, the tip of the nozzle needs to be placed excessively close to the inner periphery of the tire to form a wider portion, with the result that the sealant can easily adhere to the nozzle, thereby necessitating more frequent cleaning of the nozzle. In addition, the tire weight balance may be impaired.

The width of the wider portion of the sealant is preferably substantially constant in the longitudinal direction but may partially be substantially non-constant. For example, the wider portion may have a shape in which the width is the largest at the attachment-starting portion and gradually decreases in the longitudinal direction. The substantially constant width as used herein means that the width varies within a range of 90% to 110%, preferably 97% to 103%, more preferably 98% to 102%, still more preferably 99% to 101%.

The length of the wider portion of the sealant (the length of the wider portion of the applied sealant, length indicated by L₁ in Fig. 6) is not particularly limited. To provide more suitable effects, the length is preferably less than 650 mm, more preferably less than 500 mm, still more preferably less than 350 mm, particularly preferably less than 200 mm. If the length is 650 mm or more, the tip of the nozzle needs to be placed close to the inner periphery of the tire for a longer period of time, with the result that the sealant can easily adhere to the nozzle, thereby necessitating more frequent cleaning of the nozzle. In addition, the tire weight balance may be impaired. The sealant preferably has a shorter wider portion. However, in view of the control of the distance between the inner periphery of the tire and the tip of the nozzle, the lower limit of the length of the wider portion is about 10 mm.

The width of the sealant other than the wider portion (the width of the applied sealant other than the wider portion, length indicated by W₀ in Fig. 6) is not particularly limited. To provide more suitable effects, the width is preferably 0.8 mm or more, more preferably 1.3 mm or more, still more preferably 1.5 mm or more. If it is less than 0.8 mm, the number of turns of the sealant around the inner periphery of the tire may increase, reducing production efficiency. The width of the sealant other than the wider portion is also preferably 18 mm or less, more preferably 13 mm or less, still more preferably 9.0 mm or less, particularly preferably 7.0 mm or less, most preferably 6.0 mm or less, still most preferably 5.0 mm or less . If it is more than 18 mm, a weight imbalance may be more likely to occur. W₀ is preferably the same as the above-described W.

The width of the sealant other than the wider portion is preferably substantially constant in the longitudinal direction but may partially be substantially non-constant.

The width of the area where the sealant is attached (hereinafter also referred to as the width of the attachment area or the width of the sealant layer, and corresponding to a length equal to W₁ + 6 × W₀ in Fig. 6) is not particularly limited. To provide more suitable effects, the width is preferably 80% or more, more preferably 90% or more, still more preferably 100% or more, but is preferably 120% or less, more preferably 110% or less, of the tread contact width.

To provide more suitable effects, the width of the sealant layer is preferably 85% to 115%, more preferably 95% to 105% of the width of the breaker of the tire (the length of the breaker in the tire width direction).

In the self-sealing tire according to the second embodiment, the sealant is preferably attached without overlapping in the width direction and more preferably without gaps.

In the self-sealing tire according to the second embodiment, the other longitudinal end (the end corresponding to the attachment-ending portion) of the sealant may also form a wider portion having a width larger than that of the longitudinally adjoining portion.

The thickness of the sealant (the thickness of the applied sealant or the sealant layer, length indicated by D in Fig. 8) is not particularly limited. To provide more suitable effects, the thickness of the sealant is preferably 1.0 mm or more, more preferably 1.5 mm or more, still more preferably 2.0 mm or more, particularly preferably 2.5 mm or more, but is preferably 10 mm or less, more preferably 8.0 mm or less, still more preferably 5.0 mm or less. If the thickness is less than 1.0 mm, a puncture hole, if formed in the tire, may be difficult to reliably seal. Also, a thickness of more than 10 mm is not preferred because the tire weight increases, though little improvement is produced in the effect of sealing puncture holes.

The thickness of the sealant (the thickness of the applied sealant or the sealant layer) is preferably substantially constant. In this case, the deterioration in tire uniformity can be further prevented, and a self-sealing tire having a much better weight balance can be produced.

The ratio of the thickness of the sealant (the thickness of the applied sealant or the sealant layer, length indicated by D in Fig. 8) to the width of the sealant other than the wider portion (the width of the applied sealant other than the wider portion, length indicated by W₀ in Fig. 6) [(thickness of sealant)/(width of sealant other than wider portion)] is preferably 0.6 to 1.4, more preferably 0.7 to 1.3, still more preferably 0.8 to 1.2, particularly preferably 0.9 to 1.1. A sealant having a ratio closer to 1.0 has a shape closer to an ideal string shape so that a self-sealing tire having high sealing performance can be produced with higher productivity.

To provide more suitable effects, the cross-sectional area of the sealant (the cross-sectional area of the applied sealant, area calculated by D × W in Fig. 8) is preferably 0.8 mm² or more, more preferably 1.95 mm² or more, still more preferably 3.0 mm² or more, particularly preferably 3.75 mm² or more, but is preferably 180 mm² or less, more preferably 104 mm² or less, still more preferably 45 mm² or less, particularly preferably 35 mm² or less, most preferably 25 mm² or less.

According to the second embodiment, even though the sealant has a viscosity within the range indicated earlier, and particularly a relatively high viscosity, widening a portion of the sealant which corresponds to the attachment-starting portion can improve adhesion of this portion so that peeling of this portion of the sealant can be prevented.

The self-sealing tire according to the second embodiment is preferably produced as described above. However, the self-sealing tire may be produced by any other appropriate method as long as at least one of the ends of the sealant is allowed to form a wider portion.

Although the above descriptions, particularly the description of the first embodiment, explain the case where a non-contact displacement sensor is used in applying the sealant to the inner periphery of the tire, the sealant may be applied to the inner periphery of the tire while controlling the movement of the nozzle and/or the tire according to the pre-entered coordinate data, without measurement using a non-contact displacement sensor.

### EXAMPLES

The present invention will be more specifically described with reference to, but not limited to, examples below.

The chemicals used in the examples are listed below.
Brominated butyl rubber: Bromobutyl 2255 (available from Exxon Mobil Corporation, Mooney viscosity ML₁₊₈ at 125°C: 46, halogen content: 2.0% by mass)
Butyl rubber: Regular butyl 268 (available from Japan Butyl Co., Ltd., Mooney viscosity ML₁₊₈ at 125°C: 51)
Liquid polybutene: Nisseki polybutene HV1900 (available from JX Nippon Oil & Energy Corporation, kinematic viscosity at 40°C: 160,000 mm²/s, kinematic viscosity at 100°C: 3,710 mm²/s, number average molecular weight: 2,900)
Carbon black: N330 (available from Cabot Japan K.K., HAF grade, DBP oil absorption: 102 ml/100 g)
Plasticizer (oil): dioctyl phthalate (DOP) available from Taoka Chemical Co., Ltd.
Crosslinking activator: VULNOC GM (available from Ouchi Shinko Chemical Industrial Co., Ltd., p-benzoquinone dioxime)
Crosslinking agent: NYPER NS (available from NOF Corporation, dibenzoyl peroxide (40% dilution, dibenzoyl peroxide: 40%, dibutyl phthalate: 48%), the amount shown in Table 1 is the net benzoyl peroxide content)
NR: TSR
BR: BR150B available from Ube Industries, Ltd.
Sulfur: Seimi sulfur available from Nippon Kanryu Industry Co., Ltd.

### <Production of self-sealing tire>

According to the formulations shown in Table 1, the chemicals were introduced into a twin screw kneading extruder as follows: the rubber component, carbon black, and crosslinking activator were introduced from the upstream supply port; the liquid polybutene was introduced from the midstream supply port; and the plasticizer and crosslinking agent (organic peroxide or sulfur) were introduced from the downstream supply port. They were kneaded at a barrel temperature of 100°C, a screw rotational speed of 200 rpm, and a pressure of 5.0 MPa to prepare a sealant. The liquid polybutene was heated to 50°C before the introduction from the supply port.

### (Time for kneading materials)

Time for mixing the rubber component, carbon black, and crosslinking activator: 2 minutes
Time for mixing the liquid polybutene: 2 minutes
Time for mixing the plasticizer and crosslinking agent (organic peroxide or sulfur): 1.5 minutes

Next, the tip of a nozzle directly connected to the outlet of the twin screw kneading extruder was placed around the inner surface of a tire, and the sealant (temperature: 100°C, viscosity at 40°C: 20,000 Pa · s, generally string shape) prepared sequentially as above was discharged from the nozzle to the inner surface of the tire (preheated at 40°C) rotating in the circumferential direction, whereby the sealant was continuously and spirally applied to the inner periphery of the tire as shown in Figs. 1 to 4. In this manner, a self-sealing tire was produced. The viscosity of the sealant was measured at 40°C in accordance with JIS K 6833 using a rotational viscometer.

### 1. Increase in viscosity

The sealant collected at the nozzle was left for one day at a room temperature. Thereafter, the viscosity at -20°C of the sealant (viscosity at the start of storage at 25°C) was measured.

Then, the sealant which had been left at a room temperature was left at 25°C under a normal pressure for 10 days (240 hours) . Thereafter, the viscosity at -20°C of the sealant (viscosity after storage at 25°C for 10 days) was measured.

Then, the difference between the viscosity at the start of storage at 25°C and the viscosity after storage at 25°C for 10 days was determined. Specifically, "viscosity at the start of storage at 25°C" was subtracted from "viscosity after storage at 25°C for 10 days".

The viscosity at -20°C of the rubber composition for sealants (sealant) was measured at -20°C in accordance with JIS K 6833 using a rotational viscometer.

The measurement sample was punched out under the following conditions.
Sample preparation: A 15 mm-thick sheet was prepared from the sealant to be measured. The sheet was cooled at -40°C for eight hours in a freezer. Eight hours later, the sheet was taken out of the freezer to an environment of 23°C, and the frozen sheet was punched out using the below-described jig before its temperature increased (within five minutes) . The viscosity of the punched-out sample was measured.
Jig: a ϕ12 circular blade

### 2. Stability of viscosity

The viscosity at -20°C of the sealant collected at the nozzle (viscosity immediately after production) was measured within 6.0 hours after the collection.

Then, the collected sealant was left at 25°C under a normal pressure, and its viscosity was measured at -20°C every other day to compare the measured viscosity with the viscosity immediately after the production.

### 3. Evaluation of retention of low-temperature sealing performance

The sealant was applied at a thickness of 3 mm to the inner surface of a vulcanized 195/65R15 tire (entirely in the circumferential direction, and from one breaker edge to the other breaker edge in the width direction). A nail with a diameter of 4 mm and a length of 50 mm was driven into the tire filled with air at an internal pressure of 230 kPa in an environment of -50°C. Three hours later, the nail was removed and immediately the reduction in the internal pressure was determined.

Separately, a tire was left for 100 days after the application of the sealant and tested as described above to determine the reduction in the internal pressure under the same conditions as immediately after the production. Then, the reduction in the internal pressure of the tire immediately after the production was compared with that after 100 days to evaluate retention of low-temperature sealing performance. The results are expressed as an index, with Comparative Example 1 set equal to 100. A higher index indicates better retention of low-temperature sealing performance (sealing performance at -50°C) .

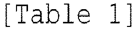

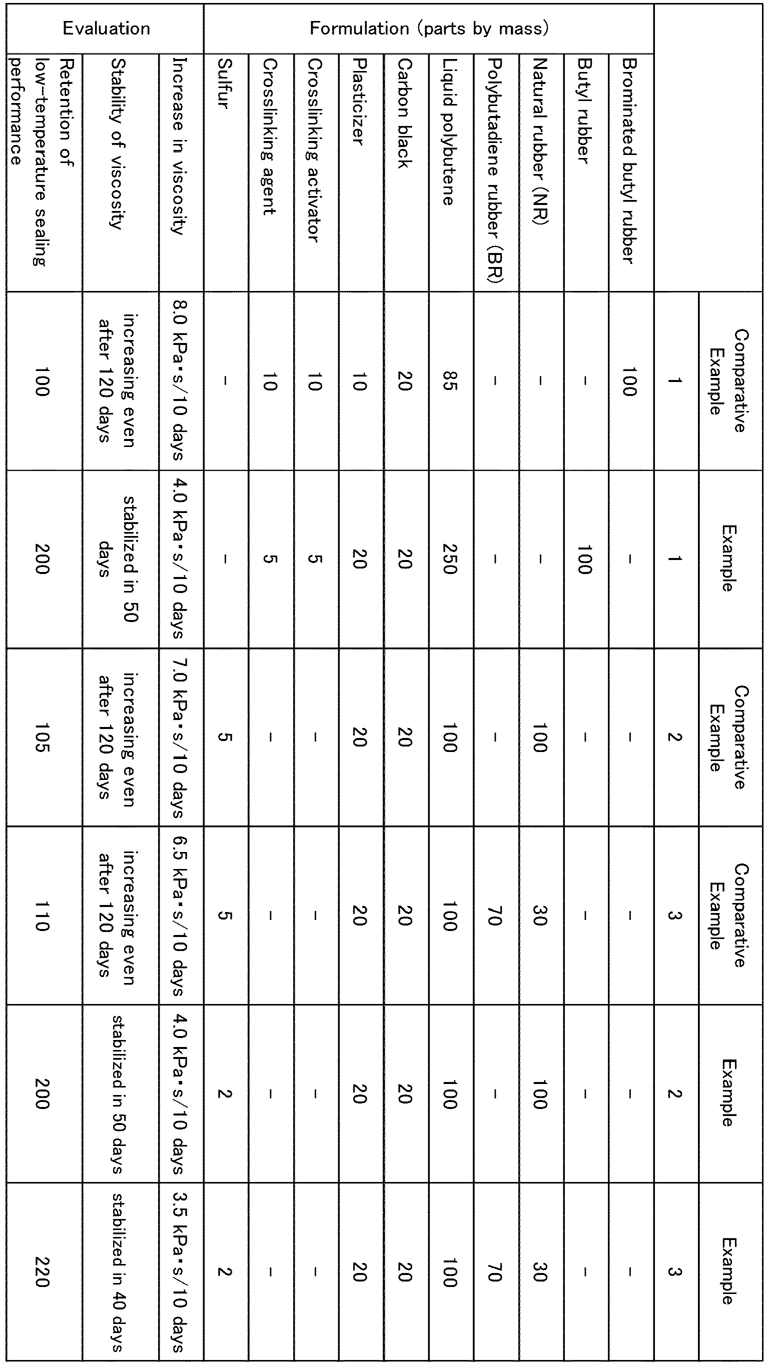

The sealants of the examples having a difference in viscosity at -20°C of 4.0 kPa · s or less between measurements before and after storage at 25°C for any 10-day period within a period of 60 days after the production exhibited excellent retention of low-temperature sealing performance.

### REFERENCE SIGNS LIST

10 Tire
11 Inner periphery of tire
14 Tread portion
15 Carcass
16 Breaker
17 Band
20 Sealant
21 Wider portion
30 Nozzle
31 Tip of nozzle
40 Non-contact displacement sensor
50 Rotary drive device
60 Twin screw kneading extruder
61 (61a, 61b, 61c) Supply port
62 Material feeder
d, d₀, d₁, d₂ Distance between inner periphery of tire and tip of nozzle

Provided are a rubber composition for sealants having excellent retention of low-temperature sealing performance, and a pneumatic tire (self-sealing tire) including the rubber composition. The present invention relates to a rubber composition for sealants, having a difference in viscosity at -20°C of 4.0 kPa · s or less between measurements before and after storage at 25°C for any 10-day period within a period of 60 days after production of the rubber composition.

## Claims

1. A rubber composition for sealants, having a difference in viscosity at -20°C of 4.0 kPa·s or less between measurements before and after storage at 25°C for any 10-day period within a period of 60 days after production of the rubber composition in accordance with JIS K 6833, wherein the rubber composition comprises, per 100 parts by mass of a rubber component therein, 20 parts by mass or more of a plasticizer.

2. The rubber composition for sealants according to claim 1,
wherein the rubber composition comprises, per 100 parts by mass of a rubber component therein, 100 parts by mass or more of a liquid polymer.

3. The rubber composition for sealants according to claim 1 or 2,
wherein the rubber composition comprises, per 100 parts by mass of a rubber component therein, 8 parts by mass or less of an organic peroxide and 8 parts by mass or less of a crosslinking activator.

4. The rubber composition for sealants according to any one of claims 1 to 3,
wherein the rubber composition comprises butyl rubber in a rubber component.

5. A pneumatic tire, comprising a sealant layer formed from the rubber composition according to any one of claims 1 to 4.

## Patentansprüche

1. Kautschukzusammensetzung für Dichtungsmassen, das einen Viskositätsunterschied bei -20°C von 4,0 kPa•s oder weniger zwischen Messungen vor und nach der Lagerung bei 25°C für irgendeinen Zeitraum von 10 Tagen innerhalb eines Zeitraums von 60 Tagen nach der Herstellung der Kautschukzusammensetzung gemäß JIS K 6833 aufweist, wobei die Kautschukzusammensetzung, pro 100 Massenteile einer Kautschukkomponente darin, 20 Massenteile oder mehr eines Weichmachers umfasst.

2. Kautschukzusammensetzung für Dichtungsmassen nach Anspruch 1, wobei die Kautschukzusammensetzung, pro 100 Massenteile einer Kautschukkomponente darin, 100 Massenteile oder mehr eines flüssigen Polymers umfasst.

3. Kautschukzusammensetzung für Dichtungsmassen nach Anspruch 1 oder 2,
wobei die Kautschukzusammensetzung, pro 100 Massenteile einer Kautschukkomponente darin, 8 Massenteile oder weniger eines organischen Peroxids und 8 Massenteile oder weniger eines vernetzenden Aktivators umfasst.

4. Kautschukzusammensetzung für Dichtungsmassen nach einem der Ansprüche 1 bis 3,
wobei die Kautschukzusammensetzung Butylkautschuk in einer Kautschukkomponente umfasst.

5. Luftreifen, der eine Dichtungsmassenschicht umfasst, die aus der Kautschukzusammensetzung nach einem der Ansprüche 1 bis 4 gebildet ist.

## Revendications

1. Composition de caoutchouc pour enduits d'étanchéité, ayant une différence de viscosité à -20 °C de 4,0 kPa.s ou moins entre des mesures avant et après stockage à 25 °C pendant n'importe quelle période de 10 jours dans une période de 60 jours suivant la production de la composition de caoutchouc conformément à la norme JIS K 6833, laquelle composition de caoutchouc comprend, pour 100 parties en masse d'un composant caoutchouc dans celle-ci, 20 parties en masse ou plus d'un plastifiant.

2. Composition de caoutchouc pour enduits d'étanchéité selon la revendication 1, laquelle composition de caoutchouc comprend, pour 100 parties en masse d'un composant caoutchouc dans celle-ci, 100 parties en masse ou plus d'un polymère liquide.

3. Composition de caoutchouc pour enduits d'étanchéité selon la revendication 1 ou 2, laquelle composition de caoutchouc comprend, pour 100 parties en masse d'un composant caoutchouc dans celle-ci, 8 parties en masse ou moins d'un peroxyde organique et 8 parties en masse ou moins d'un activateur de réticulation.

4. Composition de caoutchouc pour enduits d'étanchéité selon l'une quelconque des revendications 1 à 3, laquelle composition de caoutchouc comprend un caoutchouc de butyle dans un composant caoutchouc.

5. Pneumatique comprenant une couche d'enduit d'étanchéité formée à partir de la composition de caoutchouc selon l'une quelconque des revendications 1 à 4.
